# EUROPEAN PATENT SPECIFICATION

(11) **EP 2 107 747 B1**
(45) Date of publication and mention of the grant of the patent: **13.10.2010**
(21) Application number: 08290328.7
(22) Date of filing: 03.04.2008
(51) Int. Cl.: H04L 25/49, H04J 3/16

(54) **Data recovery for a multi-speed, multilevel signal**
Datenwiederherstellung für ein Signal mit mehreren Geschwindigkeiten und mehreren Ebenen
Récupération de données pour un signal multi-niveau à plusieurs vitesses

(43) Date of publication of application: 07.10.2009
(73) Proprietor: Alcatel Lucent, 75008 Paris (FR)
(72) Inventor: Krimmel, Heinz-Georg, 70825 Korntal-Münchingen (DE); Poehlmann, Wolfgang, 71282 Hemmingen (DE)
(74) Representative: Schmidt, Werner Karl

(56) References cited:
- US-A- 4 972 408
- US-A- 5 510 919
- US-A1- 2009 110 087
- MAREK HAJDUCZENIA ET AL: "10G EPON Standardization in IEEE 802.3av Project" OPTICAL FIBER COMMUNICATION/NATIONAL FIBER OPTIC ENGINEERS CONFERENCE, 2008. OFC/NFOEC 2008. CONFERENCE ON, IEEE, PISCATAWAY, NJ, USA, 24 February 2008 (2008-02-24), pages 1-9, XP031256859 ISBN: 978-1-55752-856-8

## Description

### Background of the Invention

The invention relates to a method for performing data recovery of a multi-speed, multi-level signal comprising a first discrete-level signal with a first symbol rate and a second discrete-level signal with a second symbol rate, the second symbol rate being an integer multiple of the first symbol rate, and to a computer program product for performing the method. The invention also relates to an optical network termination for receiving such a multi-speed, multi-level signal, as well as to a passive optical network, PON, comprising at least one such optical network termination.

Passive optical networks (PONs) are optical access networks for exchanging optical signals between a central station, commonly referred to as Optical Line Termination (OLT) and a plurality of subscriber stations, usually referred to as Optical Network Terminations (ONTs) or Optical Network Units (ONUs). The speed of the optical signals is determined by their symbol rate, i.e. the rate at which transitions between discrete levels of the optical signals occur. In case that the optical signals are binary signals with only two discrete levels, their symbol rate corresponds to the bit-rate. When more than two discrete levels are present in an optical signal, more than one bit may be transmitted between subsequent transitions, such that the bit-rate may exceed the symbol rate.

Upgrading a PON by increasing the speed of the downstream transmission of binary signals from the OLT to the ONTs from a first bit-rate (e.g. 2.5 Gbit/s) to a higher bit-rate (e.g. 10 Gbit/s) is rather difficult, the reason being as follows: Although the network operator can easily replace a legacy OLT which is not capable of performing downstream transmission at the higher bit-rate by an advanced OLT, not all of the legacy ONTs which cannot process signals with the higher bit rate can be replaced at the same time for economical reasons, as several tens to hundreds of ONTs may be connected to the same OLT.

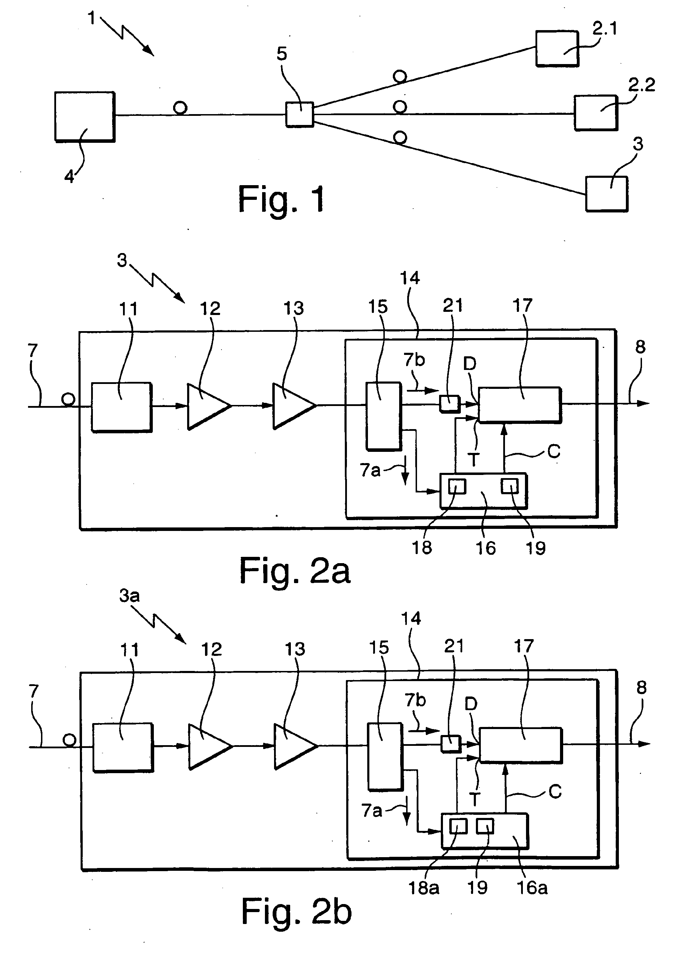

Therefore, a considerable number of legacy ONTs 2.1, 2.2 may be present together with some updated or advanced ONTs 3 in a PON 1 after such a network upgrade (see Fig. 1). An OLT 4 of the PON 1 which is connected to both types of optical network terminations 2.1, 2.2, 3 via a passive splitter 5 must then be adapted to transmit downstream signals which can be received and processed by both the legacy ONTs 2.1, 2.2 and the advanced ONTs 3. This can be achieved either by dividing the downstream transmission time into first time intervals during which data is transmitted at the high bit rate, the first time intervals alternating with second time intervals which are reserved for the transmission of data at the lower bit rate, or by transmitting data both at the high and the low bit rate concurrently. In any case, as signals of two different signal speeds are present in such a PON, the latter is referred to as a multi-mode PON, more particularly as a dual-mode PON.

In a multi-mode PON, the legacy ONTs are usually not capable to recover the clock from the binary signal transmitted with the higher bit rate. Consequently, the OLT must provide downstream signals which allow the legacy ONTs to perform their clock recovery even during time intervals when only data at the higher bit rate is transmitted. One advantageous way to generate such a downstream signal is combining, e.g. adding up, the amplitudes of two discrete-level signals, in particular binary signals, one with a lower and the other with a higher symbol rate, the phase of both signals being aligned, preferably being identical, to form a so-called bit-stacked signal.

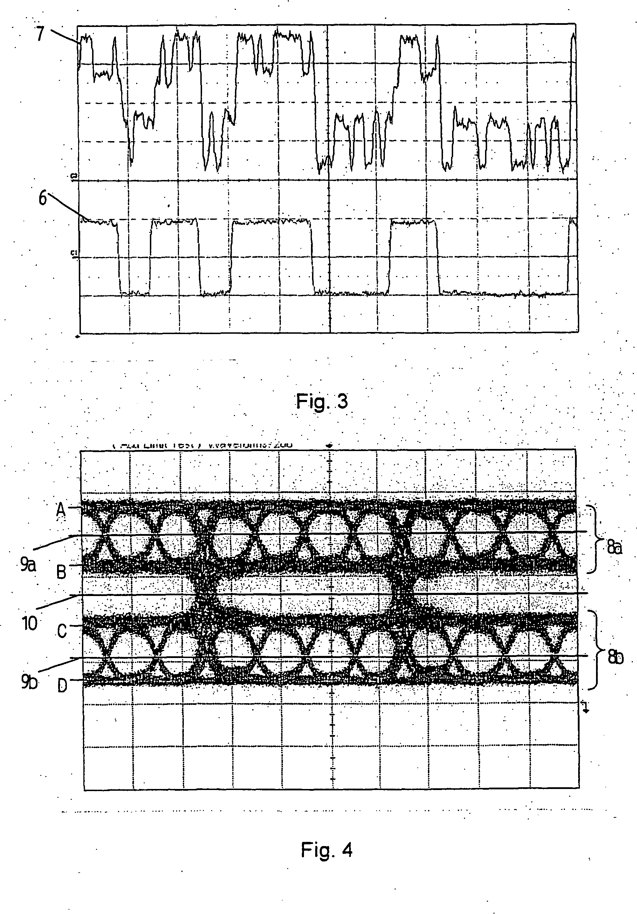

The time waveform for the example of a bit-stacked dual-speed, multi-level signal **7** resulting from this superposition in a time interval in which both high-and low-speed transmission is performed is shown in **Fig. 3** together with the time waveform of a binary signal **6** with the lower bit-rate. The binary signal with the higher bit rate may be derived from Fig. 3 by subtracting the binary signal 6 from the multi-level signal 7. With the dual-speed, multi-level signal 7, concurrent data transmission at both the higher and the lower speed is possible.

For recovering the discrete-level signal with the higher bit-rate from the multi-level signal 7 in an advanced ONT 3, typically the multi-level signal **7** is divided into two parts, each part being fed to a separate data recovery unit (decision flip-flop) adapted, to operate at the higher bit-rate (e.g. 10 Gbit/s). The two decision flip-flops have decision thresholds which are typically fixed at a mid-level **9a, 9b** between the first and second **(A, B),** resp. the third and fourth **(C, D)** discrete amplitude levels of the multi-level signal 7 shown in **Fig. 4****,** representing transitions between the amplitude levels of a multitude of multi-level signals of the type shown in Fig. 3. The second binary signal is represented in Fig. 4 by a first sub-eye pattern **8a** of transitions between the first amplitude level A and the second amplitude level B, as well as by a second sub-eye pattern 8b with transitions between the third amplitude level C and the fourth amplitude level D. The first binary signal induces transitions from the first and second levels A, B to the third and fourth levels C, D at a bit rate which is a quarter of the symbol rate of the transitions of the second binary signal 8a, 8b.

For reconstructing the discrete-level signal 8a, 8b with the higher symbol rate from the dual-speed, multi-level signal 7, the data streams recovered by the parallel decisions must be re-combined. Therefore, when using the approach described above, two parallel high-speed decision lanes and a delay adjustment is required.

### Object of the Invention

It is the object of the invention to provide: a method, a computer program product, an optical network termination, and a passive optical network, all of which allow simplifying the data recovery of a high-speed discrete-level signal from a multi-speed, multi-level signal.

### Summary of the Invention

This object is achieved by a method as described above; comprising: performing an amplitude decision of the first discrete-level signal of the multi-speed, multi-level signal, and using the decided amplitude of the first discrete-level signal to control the decision threshold for performing an amplitude decision of the second discrete-level signal of the multi-speed, multi-level signal.

By using the above method, only one data recovery unit (e.g. flip-flop) in the high-speed (e.g. 10 Gbit/s) decision path is required, to which a time-variant (multiplexed) threshold level is applied which is dependent on the first discrete-level signal. Typically, the first discrete-level signal itself with a suitable scaling and/or an offset voltage is applied as a time-variant threshold to a differential input of the data recovery unit. In such a way, the subtraction of the first disccrete-level signal from the multi-speed, multi-level signal and the amplitude decision (amplitude slicing) is integrated.

In a preferred variant, the amplitude decision of the second discrete-level signal is delayed relative to the amplitude decision of the first discrete-level signal. Typically, a short delay is introduced to the signal waveform of the multi-speed, multi-level signal, to allow the detection of the basic state (level) of the first discrete-level signal and thus to determine the applicable threshold before the decision for the second discrete-level signal is made. As the time delay is typically very short (in the range of hundreds of picoseconds), it may be introduced e.g. by choosing a suitable length of a conductive path on a circuit board connecting the electrical components for performing the data recovery or as an active element, e.g. as a linear signal amplifier or as a chain of linear signal amplifier stages.

A second aspect of the invention is implemented in a computer program product comprising code means adapted to perform all the steps of the method described above. The computer program product may be implemented in a suitable hardware, in particular a field programmable gate array (FPGA) or an application-specific integrated circuit (ASIC), as the operations required for the data and clock recovery, respectively, are time critical.

A third aspect of the invention is implemented in an optical network termination as described in the introduction, comprising: a decision unit adapted to perform an amplitude decision of the first discrete-level signal of the multi-speed, multi-level signal, and a data recovery unit, preferably a decision flip-flop, adapted to perform a data recovery of the second discrete-level signal of the multi-speed, multi-level signal, wherein the optical network termination is adapted to control the decision threshold of the amplitude decision of the data recovery unit in dependence of the decided amplitude of the first discrete-level signal. For example, an output of the decision unit may be connected to a (differential) input of the second data recovery unit to provide the extracted first discrete-level signal as a decision threshold to the second data recovery unit. For performing the amplitude decision, it is not required to perform a full data recovery (3R recovery) of the first discrete-level signal. Nevertheless, also a full data recovery, i.e. a recovery of the levels of the first discrete-level signal at specific decision times determined by a clock data recovery may be performed. In the latter case, the fully recovered first discrete-level signal at the output of a data recovery unit for the first discrete-level signal may be provided as an input to the data recovery unit for recovering the second discrete-level signal.

The optical network termination described above does not require specialized elements such as multilevel decision circuits for the reception of the stacked signal composed of legacy (e.g. 2.5 Gbit/s) and advanced (e.g. 10 Gbit/s) signals, thus enabling to design the ONT as a low-cost component. Furthermore, the reversion to pure binary transmission with the second speed at the end of the upgrade / transition period of the PON is simplified, as in this case, the only modification required is the exchange of the time-variant decision threshold with a pre-determined fixed threshold voltage (typically corresponding to an average value of the signal).

In a highly preferred embodiment, the optical network termination further comprises a signal divider for splitting the multi-level, multi-speed signal into a first and second part, the first part being provided to the decision unit, the second part being provided to the data recovery unit, thus allowing to perform the amplitude decisions of the first and second discrete-level signal in parallel.

In another preferred embodiment, the optical network unit further comprises a delay unit for delaying the second part of the multi-level, multi-speed signal relative to the first part of the multi-level, multi-speed signal. The delay unit may be implemented as a separate physical entity, or by choosing a suitable length of a conductive path on a circuit board which comprises the components for the data recovery, the conductive path being e.g. arranged between the output of the signal divider and an input of the data recovery unit serving as an input for the decision threshold.

In a highly preferred embodiment, the decision unit for performing the amplitude decision of the first discrete-level signal is a limiting amplifier. The limiting amplifier generates a signal with only two amplitude levels from the multi-speed, multi-level signal, the upper level being attained when the amplitude of the multi-speed, multi-level signal is above an average level (which may be chosen to be at zero voltage), the lower level being attained when the amplitude of the multi-level, multi-speed signal is below the average level. In such a way, a time-varying threshold level for the data recovery of the second discrete-level signal may be generated without having to perform a full data recovery of the first discrete-level signal.

In a further preferred embodiment, the optical network unit further comprises a clock recovery unit adapted to recover the clock of the second discrete-level signal, preferably from the first discrete-level signal of the multi-speed, multi-level signal, the clock recovery unit and the decision unit being preferably implemented in a shared clock data recovery unit. For the purpose of recovering the clock of the second discrete-level signal, typically the clock recovery unit synchronizes a local oscillator generating the second speed to the first discrete-level signal, which is possible as the first and second discrete-level signal have a constant phase relation. The person skilled in the art will appreciate that in this way, the clock recovery unit may be used to recover both, the clock of the second and the clock of the first discrete-level signal.

In yet another highly preferred embodiment, the optical network unit further comprises at least one amplification unit for linear amplification of the multi-level, multi-speed signal. In contrast to conventional amplifiers for optical signals which limit the edges of the amplitude of the amplified signal, when using a multi-level, multi-speed signal, using linear amplifiers is of advantage, as the high-speed signal is transmitted close to the edges of the amplitude range in this case and should not be limited.

A fourth aspect of the invention is implemented in a passive optical network, comprising: an optical line termination adapted to generate a multi-speed, multi-level signal by combining a first discrete-level signal having a first symbol rate and a second discrete-level signal having a second symbol rate, the second symbol rate being an integer multiple of the first symbol rate, and at least one optical network termination as described above. Usually, such a PON is a multi-mode PON, comprising at least one advanced ONT as described above and at least one legacy ONT, the latter only being capable of receiving and processing the first discrete-level signal with the lower signal speed.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Drawings

Exemplary embodiments are shown in the diagrammatic drawing and are explained in the description below. The following are shown:
- **Fig. 1**: a schematic diagram of an embodiment of a PON according to the invention,
- **Figs. 2a,b**: schematic representations of two embodiments of an ONT according to the invention,
- **Fig. 3**: a time waveform of a multi-level signal and of a binary signal used in downstream transmission in the passive optical network of Fig. 1, and
- **Fig. 4**: an eye pattern of the multi-level signal of Fig. 3.

### Detailed Description of Preferred Embodiments

In the following, the data recovery of a high-speed discrete-level signal from a multi-speed, multi-level signal will be described for the example of the recovery of a binary high-speed signal from the multi-level signal 7 shown in Fig. 3. The person skilled in the art will appreciate that the data recovery of discrete-level signals having more than two levels from multi-level signals having more than four levels constitutes a straightforward generalization of the concepts described herein.

In the PON 1 of Fig. 1, the OLT 4 generates the dual-speed, multi-level signal 7 shown in Fig. 3 by combining the first binary signal 6 shown in Fig. 3 at a speed of 2.5 Gbit/s with a second binary signal (not shown) at a speed of 10 Gbit/s. The combining is typically performed in the electrical domain, the combined signals being fed to an optical transmitter for performing the downstream transmission from the OLT 4 to the ONTs 2.1, 2.2, 3.

**Fig. 2a** is a more detailed representation of the advanced ONT 3 of Fig. 1 to which the dual-speed, multi-level signal 7 of Fig. 3 is provided as an input. The ONT 3 comprises an o/e-conversion unit **11** with a photodiode for converting the dual-speed, multi-level signal 7 from the optical to the electrical domain. A linear pre-amplifier **12** and a linear post-amplifier **13** are provided in the ONT 3 for re-amplifying the multi-level signal 7 before it is fed to a data recovery device **14** for recovering (and re-shaping) a high-speed binary signal **8** from the dual-speed, multi-level signal 7.

For this purpose, a signal divider **15,** a combined clock / decision unit **16** for recovering the clock from the dual-speed, multi-level signal 7 and for performing an amplitude decision of the first binary signal 6, and a data recovery unit **17** in the form of a decision flip-flop are arranged in the data recovery device 14.

The signal divider 15 splits the dual-speed, multi-level signal 7 into a first and a second part **7a, 7b,** the second part 7b being provided to a first input **D** of the data recovery unit 17, the first part 7a being provided as an input to the combined clock / decision unit 16.

For recovering the second binary signal 8 from the dual-speed, multi-level signal 7, first of all, the amplitude decision of the first binary signal of the dual-speed, multi-level signal 7 is performed in the combined clock / decision unit 16 in a way which will be described in greater detail below. The decided amplitude of the first binary signal is then provided from an output of the clock / decision unit 16 to a second input **T** of the data recovery unit 17. In such a way, a time-variant decision threshold is provided to the data recovery unit 17 for extracting the second binary signal 8 from the multi-level signal 7. The scaling and offset of the decided amplitude of the decided amplitude of the first binary signal which is provided to the second input T is modified such that the time-variant threshold oscillates between the decision thresholds 9a, 9b shown in Fig. 4. By using such a suitably scaled time-variant threshold, the correct amplitude (voltage) level for the data recovery of the second discrete-level signal 8 can always be provided.

For generating the amplitude decision of the first binary signal 6 in the clock / decision unit 16, a limiting amplifier **18** is used as a decision unit. The limiting amplifier 18 provides a first constant value (not shown) in case that the multi-speed, multi-level signal 7 is above a voltage level (0 V) being fixed at the average value of the multi-level signal 7, and a second constant value (also not shown) in case that the multi-speed, multi-level signal 7 is below that voltage level. By providing a suitable scaling, the limiting amplifier 18 produces a time-variant signal which can serve as a time-variant threshold which oscillates between the decision thresholds 9a, 9b shown in Fig. 4.

As the decision for recovering the first binary signal 6 is not instantaneous, the second part 7b of the multi-level signal 7 is delayed in time with respect to the first part 7a by using a linear amplifier as a delay unit **21** between the signal divider 15 and the data recovery unit 17 of the data recovery device 14. In such a way, a synchronization of the second part 7b of the multi-level signal 7 and the decided first discrete-level signal being used as a threshold level may be performed. The person skilled in the art will appreciate that other ways of delaying the second part 7b of the multi-level signal 7 with respect to the first part 7a of the multi-level signal 7 exist, from which the skilled person will choose depending on the specific application.

In the following, the generation of the clock of the second binary signal 8 will be explained in greater detail. A clock recovery unit **19** is used to recover both the clock of the second binary signal 8 at 10 Gbit/s and the clock of the first binary signal 6 (at 2.5 Gbit/s). The clock of the second binary signal 8 can be recovered by choosing a threshold **10** for the clock recovery unit 19 at an average level of the bit-stacked signal 7 (see Fig. 4) and by synchronizing a local oscillator (not shown) generating the second speed (i.e. 10 Gbit/s) to the first discrete-level signal 6. A 10 Gbit/s clock signal **C** thus recovered is then provided to the data recovery unit 17 in the usual way. The person skilled in the art will appreciate that other ways of recovering the clock of the second discrete-level signal 8 exist and will select and appropriate one depending on the specific application.

An alternative way of performing an amplitude decision of the first discrete-level signal 6 is shown in **Fig. 2b** for an optical line termination **3a.** The OLT 3a differs from the one described with reference to Fig. 2a in that a shared clock data recovery unit **16a** is used, comprising a clock recovery unit 19 as described above, yet using a decision flip-flop as a decision unit **18a.** The clock signal of the first binary signal 6 at 2.5 Gbit/s (not shown) derived from the 10 Gbit/s signal is provided to the decision unit 18a for setting a decision time, using a fixed threshold 10 at the average level of the multi-level signal 7 for performing the amplitude decision. In such a way, a full data recovery of the first binary signal 6 from the first part 7a of the multi-level signal 7 can be performed, such that the decision unit 18a serves as a further data recovery unit in this case. The fully recovered first discrete-level signal 6 is then provided as an input (threshold level) to the data recovery unit 17. As the full recovery of the first binary signal 6 from the multi-speed, multi-level signal 7 takes more time than in the case described with reference to Fig. 2a, the delay unit 21 may comprise a series of linear amplifier stages for delaying the second part 7b of the multi-speed, multi-level signal 7 with respect to the first part 7a of the multi-speed, multi-level signal.

Although the above description has been given with respect to multi-level signals at speeds of 2.5 Gbit/s and 10 Gbit/s, respectively, the approach described above may also be applied to signals having different speeds and is in particular not limited to the use of binary signals. The person skilled in the art will also appreciate that the data recovery unit(s) may not necessarily be devised as flip-flops, as other types of elements exist for performing the data recovery from which the skilled person will choose a suitable one depending on the type of application.

In summary, when using an ONT of the type described above, as compared to the classical approach using two fixed decision thresholds, a decision flip-flop and a combiner for combining the output signals of the two decision flip-flops forming a continuous data stream at 10 Gbit/s may be disposed with. Thus, standard clock data recovery and flip-flops can be employed to create a very simple ONT which may be provided at low cost.

A further improvement is the simpler reversion to 10 Gbit/s binary transmission at the end of the network upgrade/transition phase from 2.5 Gbit/s to 10 Gbit/s: After all the 2.5 Gbit/s legacy users (ONTs 2.1, 2.2) in the multi-mode PON 1 have moved to a 10 Gbit/s advanced service, the need for transmitting the 2.5 Gbit/s data signal component does no longer exist, and changing from the bit-stacked signal 7 to pure binary signals at 10 Gbit/s is of advantage, as it improves the Signal-to-Noise ratio of the received signals and therefore gives an additional margin. In this case, the only change which has to be performed in the OLT 3 is to exchange the 2.5 Gbit/s data input from the clock data recovery unit 16 with a fixed predetermined threshold voltage (e.g. an average value of the 10 Gbit/s signal), a change which may be performed from a remote location, e.g. by sending a suitable command from the OLT 4 to the ONT 3.

The above description of the preferred embodiments has been given by way of example. From the disclosure given, those skilled in the art will not only understand the present invention and its attendant advantages, but will also find apparent various changes and modifications to the structures and methods disclosed. The applicant seeks, therefore, to cover all such changes and modifications as fall within the spirit and scope of the invention, as defined by the appended claims, and equivalents thereof.

## Claims

1. Method for performing data recovery of a multi-speed, multi-level signal (7) in an optical network termination (3; 3a) of a passive optical network (1), the multi-speed, multi-level signal (7) comprising a first discrete-level signal (6) with a first symbol rate and a second discrete-level signal (8; 8a, 8b) with a second, higher symbol rate, the second symbol rate being an integer multiple of the first symbol rate, the second discrete-level signal (8, 8a, 8b) inducing transitions between a first and a second amplitude level (A, B) and between a third and a fourth amplitude level (C, D) of the multi-speed, multi-level signal (7), respectively, the first discrete-level signal (6) inducing transitions from the first and second amplitude levels (A, B) to the third and fourth amplitude levels (C, D) of the multi-speed, multi-level signal (7), the method comprising:
performing an amplitude decision of the first, low-speed discrete-level signal (6) of the multi-speed, multi-level signal (7), and
using the decided amplitude of the first, low-speed discrete-level signal (6) to control the decision threshold (9a, 9b) for performing an amplitude decision of the second, high-speed discrete-level signal (8; 8a, 8b) of the multi-speed, multi-level signal (7).

2. Method according to claim 1, wherein the amplitude decision of the second discrete-level signal (6) is delayed relative to the amplitude decision of the first discrete-level signal (8; 8a, 8b).

3. Computer program product comprising code means adapted to perform all the steps of the method according to claim 1.

4. Optical network termination (3; 3a) for a passive optical network (1), adapted to receive a multi-speed, multi-level signal (7) comprising a first discrete-level signal (6) having a first symbol rate and a second discrete-level signal (8; 8a, 8b) having a second, higher symbol rate, the second symbol rate being an integer multiple of the first symbol rate, the second discrete-level signal (8, 8a, 8b) inducing transitions between a first and a second amplitude level (A, B) and between a third and a fourth amplitude level (C, D) of the multi-speed, multi-level signal (7), respectively, the first discrete-level signal (6) inducing transitions from the first and second amplitude levels (A, B) to the third and fourth amplitude levels (C, D) of the multi-speed, multi-level signal (7), the optical network termination (3) comprising:
a decision unit (18, 18a) adapted to perform an amplitude decision of the first, low-speed discrete-level signal (6) of the multi-speed, multi-level signal (7), and
a data recovery unit (17), preferably a decision flip-flop, adapted to perform a data recovery of the second, high-speed discrete-level signal (8; 8a, 8b) of the multi-speed, multi-level signal (7), wherein
the optical network termination (3) is adapted to control the decision threshold (9a, 9b) of the amplitude decision of the data recovery unit (17) in dependence of the decided amplitude of the first, low-speed discrete-level signal (6).

5. Optical network termination according to claim 4, further comprising a signal divider (15) for splitting the multi-level, multi-speed signal (7) into a first and second part (7a, 7b), the first part (7a) being provided to the decision unit (18, 18a), the second part (7b) being provided to the data recovery unit (17).

6. Optical network termination according to claim 5, further comprising a delay unit (21) for delaying of the second part (7b) of the multi-level, multi-speed signal (7) relative to the first part (7a) of the multi-level, multi-speed signal (7).

7. Optical network termination according to claim 5, wherein the decision unit for performing the amplitude decision of the first discrete-level signal (6) is a limiting amplifier (18).

8. Optical network termination according to claim 4, further comprising a clock recovery unit (19) adapted to recover the clock of the second discrete-level signal (8; 8a, 8b) preferably from the first discrete-level signal (6) of the multi-speed, multi-level signal (7), the clock recovery unit (19) and the decision unit (18a) being preferably implemented in a shared clock data recovery unit (16a).

9. Optical network termination according to claim 4, further comprising at least one amplification unit (12, 13) for linear amplification of the multi-level, multi-speed signal (7).

10. Passive optical network (1), comprising:
an optical line termination (4) adapted to generate a multi-speed, multi-level signal (7) by combining a first discrete-level signal (6) having a first symbol rate and a second discrete-level signal (8; 8a, 8b) having a second, higher symbol rate, the second symbol rate being an integer multiple of the first symbol rate, and
at least one optical network termination (3; 3a) according to claim 4.

## Patentansprüche

1. Verfahren zur Durchführung der Datenwiederhestellung für ein Signal mit mehreren Geschwindigkeiten und mehreren Pegeln (7) in einem optischen Netzwerkabschluss (3; 3a) eines passiven optischen Netzwerks (1), wobei das Signal mit mehreren Geschwindigkeiten und mehreren Pegeln (7) ein erstes pegeldiskretes Signal (6) mit einer ersten Symbolrate und ein zweites pegeldiskretes Signal (8; 8a, 8b) mit einer zweiten, höheren Symbolrate umfasst, wobei die zweite Symbolrate ein ganzzahliges Vielfaches der ersten Symbolrate ist, wobei das zweite pegeldiskrete Signal (8, 8a, 8b) Übergänge zwischen jeweils einem ersten und einem zweiten Amplitudenpegel (A, B) beziehungsweise einem dritten und einem vierten Amplitudenpegel (C, D) des Signals mit mehreren Geschwindigkeiten und mehreren Pegeln (7) induziert, wobei das erste pegeldiskrete Signal (6) Übergänge von dem ersten und dem zweiten Amplitudenpegel (A, B) zum dritten und vierten Amplitudenpegel (C, D) des Signals mit mehreren Geschwindigkeiten und mehreren Pegeln (7) induziert, wobei das Verfahren umfasst:
Ausführen einer Amplitudenentscheidung des ersten pegeldiskreten Niedrigkeitsgeschwindigkeits-Signals (6) des Signals mit mehreren Geschwindigkeiten und mehreren Pegeln (7), und
Verwenden der entschiedenen Amplitude des ersten pegeldiskreten Niedrigkeitsgeschwindigkeits-Signals (6), um die Entscheidungsschwelle (9a, 9b) zum Durchführen einer Amplitudenentscheidung des zweiten pegeldiskreten Hochgeschwindigkeits-Signals (8; 8a, 8b) des Signals mit mehreren Geschwindigkeiten und mehreren Pegeln (7) zu steuern.

2. Verfahren nach Anspruch 1, wobei die Amplitudenentscheidung des zweiten pegeldiskreten Signals (6) in Bezug auf die Amplitudenentscheidung des ersten pegeldiskreten Signals (8; 8a, 8b) verzögert wird.

3. Computerprogramm-Produkt mit Codemitteln, die dazu ausgelegt sind, alle Schritte des Verfahrens nach Anspruch 1 durchzuführen.

4. Optischer Netzwerkanschluss (3; 3a) für ein passives optisches Netzwerk (1), dazu ausgelegt, ein Signal mit mehreren Geschwindigkeiten und mehreren Pegeln (7), welches ein erstes pegeldiskretes Signal (6) mit einer ersten Symbolrate und ein zweites pegeldiskretes Signal (8; 8a, 8b) mit einer zweiten, höheren Symbolrate umfasst, zu empfangen, wobei die zweite Symbolrate ein ganzzahliges Vielfaches der ersten Symbolrate ist, wobei das zweite pegeldiskrete Signal (8, 8a, 8b) Übergänge zwischen jeweils einem ersten und einem zweiten Amplitudenpegel (A, B) beziehungsweise einem dritten und einem vierten Amplitudenpegel (C, D) des Signals mit mehreren Geschwindigkeiten und mehreren Pegeln (7) induziert, wobei das erste pegeldiskrete Signal (6) Übergänge von dem ersten und dem zweiten Amplitudenpegel (A, B) zum dritten und vierten Amplitudenpegel (C, D) des Signals mit mehreren Geschwindigkeiten und mehreren Pegeln (7) induziert, wobei der optische Netzwerkanschluss (3) umfasst:
eine Entscheidungseinheit (18, 18a), welche dazu ausgelegt ist, eine Amplitudenentscheidung des ersten pegeldiskreten Niedrigkeitsgeschwindigkeits-Signals (6) des Signals mit mehreren Geschwindigkeiten und mehreren Pegeln (7) durchzuführen, und
eine Datenwiederherstellungseinheit (17), vorzugsweise ein Entscheidungs-Flipflop, welche dazu ausgelegt ist, eine Datenwiederherstellung des zweiten pegeldiskreten Hochgeschwindigkeits-Signals (8; 8a, 8b) des Signals mit mehreren Geschwindigkeiten und mehreren Pegeln (7) durchzuführen, wobei der optische Netzwerkabschluss (3) dazu ausgelegt ist, die Entscheidungsschwelle (9a, 9b) der Amplitudenentscheidung der Datenwiederherstellungseinheit (17) in Abhängigkeit von der entschiedenen Amplitude des ersten pegeldiskreten Niedergeschwindigkeits-Signals (6) zu steuern.

5. Optischer Netzwerkabschluss nach Anspruch 4, weiterhin umfassend einen Signalteiler (15) zum Splitten des Signals mit mehreren Geschwindigkeiten und mehreren Ebenen (7) in einen ersten und einen zweiten Abschnitt (7a, 7b), wobei der erste Abschnitt (7a) an die Entscheidungseinheit (18, 18a) und der zweite Abschnitt (7b) an die Datenwiederherstellungseinheit (17) bereitgestellt wird.

6. Optischer Netzwerkabschluss nach Anspruch 5, weiterhin umfassend eine Verzögerungseinheit (21) zum Verzögern des zweiten Abschnitts (7b) des Signals mit mehreren Geschwindigkeiten und mehreren Pegeln (7) in Bezug auf den ersten Abschnitt (7a) des Signals mit mehreren Geschwindigkeiten und mehreren Pegeln (7).

7. Optischer Netzwerkabschluss nach Anspruch 5, wobei die Entscheidungseinheit zum Durchführen der Amplitudenentscheidung des ersten pegeldiskreten Signals (6) ein Begrenzungsverstärker (18) ist.

8. Optischer Netzwerkabschluss nach Anspruch 4, weiterhin umfassend eine Taktwiederherstellungseinheit (19), welche dazu ausgelegt ist, den Takt des zweiten pegeldiskreten Signals (8; 8a, 8b) vorzugsweise aus dem ersten pegeldiskreten Signal (6) des Signals mit mehreren Geschwindigkeiten und mehreren Pegeln (7) wiederherzustellen, wobei die Taktwiederherstellungseinheit (19) und die Entscheidungseinheit (18a) vorzugsweise in einer gemeinsamen Taktdatenwiederherstellungseinheit (16a) implementiert werden.

9. Optischer Netzwerkabschluss nach Anspruch 4, weiterhin umfassend mindestens eine Verstärkungseinheit (12, 13) für die lineare Verstärkung des Signals mit mehreren Geschwindigkeiten und mehreren Pegeln (7).

10. Passives optisches Netzwerk (1), umfassend:
einen optischen Leitungsabschluss (4), welcher dazu ausgelegt ist, durch das Kombinieren eines ersten pegeldiskreten Signals (6) mit einer ersten Symbolrate und eines zweiten pegeldiskreten Signals (8; 8a, 8b) mit einer zweiten, höheren Signalrate ein Signal mit mehreren Geschwindigkeiten und mehreren Pegeln (7) zu erzeugen, wobei die zweite Symbolrate ein ganzzahliges Vielfaches der ersten Symbolrate ist, und
mindestens einen optischen Netzwerkabschluss (3; 3a) nach Anspruch 4.

## Revendications

1. Procédé de réalisation d'une récupération de données d'un signal à vitesses multiples et niveaux multiples (7) dans une extrémité de réseau optique (3 ; 3a) d'un réseau optique passif (1), le signal à vitesses multiples et niveaux multiples (7) comprenant un premier signal de niveau discret (6) avec un premier débit de symboles et un deuxième signal de niveau discret (8 ; 8a, 8b) avec un deuxième débit de symboles supérieur, le deuxième débit de symboles étant un multiple entier du premier débit de symboles, le deuxième signal de niveau discret (8 ; 8a, 8b) induisant des transitions entre un premier et un deuxième niveaux d'amplitude (A, B) et entre un troisième et un quatrième niveaux d'amplitude (C, D) du signal à vitesses multiples et niveaux multiples (7), respectivement, le premier signal de niveau discret (6) induisant des transitions des premier et deuxième niveaux d'amplitude (A, B) aux troisième et quatrième niveaux d'amplitude (C, D) du signal à vitesses multiples et niveaux multiples (7), le procédé comprenant :
l'exécution d'une décision d'amplitude du premier signal de niveau discret à faible vitesse (6) du signal à vitesses multiples et niveaux multiples (7) et
l'utilisation de l'amplitude décidée du premier signal de niveau discret à faible vitesse (6) pour commander le seuil de décision (9a, 9b) pour exécuter une décision d'amplitude du deuxième signal de niveau discret à grande vitesse (8 ; 8a, 8b) du signal à vitesses multiples et niveaux multiples (7).

2. Procédé selon la revendication 1, dans lequel la décision d'amplitude du deuxième signal de niveau discret (6) est retardée par rapport à la décision d'amplitude du premier signal de niveau discret (8; 8a, 8b).

3. Produit de programme informatique comprenant des moyens de code adaptés pour exécuter toutes les étapes du procédé selon la revendication 1.

4. Extrémité de réseau optique (3 ; 3a) pour un réseau optique passif (1), adaptée pour recevoir un signal à vitesses multiples et niveaux multiples (7) comprenant un premier signal de niveau discret (6) avec un premier débit de symboles et un deuxième signal de niveau discret (8 ; 8a, 8b) avec un deuxième débit de symboles supérieur, le deuxième débit de symboles étant un multiple entier du premier débit de symboles, le deuxième signal de niveau discret (8 ; 8a, 8b) induisant des transitions entre un premier et un deuxième niveaux d'amplitude (A, B) et entre un troisième et un quatrième niveaux d'amplitude (C, D) du signal à vitesses multiples et niveaux multiples (7), respectivement, le premier signal de niveau discret (6) induisant des transitions des premier et deuxième niveaux d'amplitude (A, B) aux troisième et quatrième niveaux d'amplitude (C, D) du signal à vitesses multiples et niveaux multiples (7), l'extrémité de réseau optique (3) comprenant :
une unité de décision (18, 18a) adaptée pour exécuter une décision d'amplitude du premier signal de niveau discret à faible vitesse (6) du signal à vitesses multiples et niveaux multiples (7) et
une unité de récupération de données (17), de préférence une bascule de décision, adaptée pour effectuer une récupération de données du deuxième signal de niveau discret à grande vitesse (8 ; 8a, 8b) du signal à vitesses multiples et niveaux multiples (7), dans laquelle
l'extrémité de réseau optique (3) est adaptée pour contrôler le seuil de décision (9a, 9b) de la décision d'amplitude de l'unité de récupération de données (17) en fonction de l'amplitude décidée du premier signal de niveau discret à faible vitesse (6).

5. Extrémité de réseau optique selon la revendication 4, comprenant en outre un diviseur de signal (15) pour séparer le signal à vitesses multiples et niveaux multiples (7) en une première et une deuxième parties (7a, 7b), la première partie (7a) étant appliquée à l'unité de décision (18, 18a), la deuxième partie (7b) étant appliquée à l'unité de récupération de données (17).

6. Extrémité de réseau optique selon la revendication 5, comprenant en outre une unité de retard (21) pour retarder la deuxième partie (7b) du signal à vitesses multiples et niveaux multiples (7) par rapport à la première partie (7a) du signal à vitesses multiples et niveaux multiples (7).

7. Extrémité de réseau optique selon la revendication 5, dans laquelle l'unité de décision pour exécuter la décision d'amplitude du premier signal de niveau discret (6) est un amplificateur de limitation (18).

8. Extrémité de réseau optique selon la revendication 4, comprenant en outre une unité de récupération d'horloge (19) adaptée pour récupérer l'horloge du deuxième signal de niveau discret (8; 8a, 8b) de préférence à partir du premier signal de niveau discret (6) du signal à vitesses multiples et niveaux multiples (7), l'unité de récupération d'horloge (19) et l'unité de décision (18a) étant de préférence mises en oeuvre dans une unité de récupération de données d'horloge partagée (16a).

9. Extrémité de réseau optique selon la revendication 4, comprenant en outre au moins une unité d'amplification (12, 13) pour une amplification linéaire du signal à vitesses multiples et niveaux multiples (7).

10. Réseau optique passif (1), comprenant :
une extrémité de ligne optique (4) adaptée pour générer un signal à vitesses multiples et niveaux multiples (7) en combinant un premier signal de niveau discret (6) ayant un premier débit de symboles et un deuxième signal de niveau discret (8 ; 8a, 8b) ayant un deuxième débit de symboles supérieur, le deuxième débit de symboles étant un multiple entier du premier débit de symboles, et
au moins une extrémité de réseau optique (3 ; 3a) selon la revendication 4.
